# EUROPEAN PATENT APPLICATION

(11) **EP 4 015 570 A1**
(43) Date of publication of application: **22.06.2022**
(21) Application number: 20216152.7
(22) Date of filing: 21.12.2020
(51) Int. Cl.: C08J 5/18, B65D 65/46, C08K 3/26, C08K 3/34, C08L 67/04

(54) **BIODEGRADABLE AND COMPOSTABLE SHEET WITH A DEAD FOLD**

(71) Applicant: Gaia Holding AB, 253 68 Helsingborg (SE)
(72) Inventor: ROSÉN, Åke, 254 54 HELSINGBORG (SE); LUND, Bernt-Jonny, 267 75 EKEBY (SE)
(74) Representative: AWA Sweden AB

(57) **Abstract**

The present invention concerns a biodegradable and compostable sheet comprising a composition comprising i) 10-50 % by weight of at least one biodegradable and/or decayable aromatic polyester; ii) 30-70 % by weight of dolomite and/or calcium carbonate particles having a polished surface; iii) 5-20 % by weight of paper fibers; iv) 1-5 % by weight of at least one oil of vegetable origin and/or at least one polyol; v) 10-20 % by weight of at least one additive chosen from hydrated magnesium silicate, wherein the sheet has dead fold properties.

## Description

### Technical field of the invention

The present invention relates to a biodegradable and compostable sheet comprising a composition of different components, that it is fully biodegradable and fully compostable after decomposition. Said sheet has further dead fold properties.

### Technical Background

Packaging or wrapping materials are made from different raw materials depending on what product is to be sealed. The different raw materials may have different stiffness, may be made of several different layers and may be treated with different compounds to have a certain surface depending on the use. A common challenge for all packaging materials is to combine a good functionality with being made from renewable resources, being degradable or recyclable and not releasing toxic compounds, such as micro plastics, to the ground.

Fossil based plastic materials, such as polyolefins, are commonly used packaging materials. However, it has during late time been more and more questioned. The conventional raw material for the commonly used polyolefin polyethene (PE) is petroleum or natural gas. This raw material is not renewable, it is not degradable and during combustion it releases methane gas. To overcome some of this, PE has instead been produced from sugar canes. However, even if sugar canes being a renewable raw material, it still releases methane gas during combustion and it is not degradable. Further, sugar canes are produced in Brazil, leading to long transport of the material, and during production, sugar canes demand large amount of water.

Another commonly used material for wrapping food, such as butter or margarine, is aluminum or paper covered with aluminum. However, the use of metals also has environmental drawbacks.

Further, in many applications of packaging, many layers of different materials are needed. The different layers all have one or more specific tasks to fill. The tasks could be to allow or block air flow, to be repulsive against water, to isolate the product from heat or cold, or to act as a shock absorber to protect the product. The many layers introduce problems during recycling, since they are often made from different materials, which must be separated to be able to recycle properly.

However, not only packaging or wrapping materials made of different layers give problems during recycling. To be able to recycle PE from one article to produce a new one, it has to go through a process of autoclaving to remove bacteria. This process is more expensive than producing new PE, leading to a low degree of recycling and thus more use of the raw materials.

Further, many materials have shown to compose into substances toxic to human or nature, making them not suitable for use at places where they are exposed to humans, such as packaging or wrapping food.

Even further, use of plastics in many products has led to the release of small plastic components, called micro plastics, into the ground and water. Micro plastics have been found all over the globe and it is today not known what environmental effects the large distribution can have.

WO 2017/141 205 discloses a sheet having dead-fold properties, wherein said sheet comprises at least 75% cellulose fibers and said fibers have a length of less than 1 mm.

EP 1 311 582 discloses a biodegradable polymer film for use as laminate coating and as wraps.

From both governments and public there is a large demand for better materials to use as packaging and wrapping. The new material must be made to a large extent of renewable sources, be biodegradable and compostable. One such material commonly used for replacing plastics is polylactic acid (PLA) produced from starch. However, this material comes with some drawbacks some of them being that the temperature for decomposition is 70 ºC, but the softening temperature is 50 ºC. This gives drawbacks during decomposition, since a high temperature is needed to initiate the process, while at the same time the products softens at 50 ºC which restrains the product from being used in environments with temperatures above 50 ºC.

Thus, there is a need for developing new materials for packaging and wrapping materials.

### Summary of the invention

One object of the present invention is to provide a sheet suitable for replacing plastics, which sheet comprises a composition made from renewable resources, which is biodegradable, compostable, and which does not leave micro plastics.

Further, one object of the present invention is to provide a sheet suitable for processing into a material for packaging and wrapping, which has dead fold properties.

Further, one object of the present invention is to provide a sheet suitable for being a monolayer material for packaging and wrapping.

The present invention concerns a biodegradable and compostable sheet comprising a composition, wherein the composition comprising: (i) 10-50 % by weight of at least one biodegradable and/or decayable aromatic polyester; (ii) 30-70 % by weight of dolomite and/or calcium carbonate particles having a polished surface; (iii) 5-20 % by weight of paper fibers; (iv) 1-5 % by weight of at least one oil of vegetable origin and/or at least one polyol; (v) 10-20 % by weight of at least one additive chosen from hydrated magnesium silicate; wherein the sheet has dead fold properties.

Hereby an improved sheet suitable as a material for packaging or wrapping is provided. The sheet comprises a compound which does not leave microplastics or toxic compounds, and which is biodegradable and compostable. The proportion of dolomite and/or calcium carbonate particles in combination with the paper fibers provides with a sheet with a stiffness allowing for a dead fold to form. Dead fold is the property of a material which allows it to, once folded or wrapped, stay folded and not unfold or unwrap. Spontaneously unfolding or unwrapping is an inherent feature of commonly used plastic such as PE. No impregnation, metallization, such as with aluminum, or lamination is needed for the dead fold of the sheet of the present invention to form, thus the production is simplified and the environmental impact is lowered.

Further, the sheet of the present invention has such a composition that when used for wrapping food or other items, the sheet needs not to be combined with sheets of other materials providing a multi-layer sheet. The sheet of the present invention comprises a composition which comprises a mixture of components such that the effect of multiple layer may be fulfilled with only a monolayer. This provides with a sheet which is easier to manufacture than the materials made of multiple layers. In addition, so called tie-layer adhesives that are commonly used in multilayer packages are not required according to the present invention.

Moreover, the sheet of the present invention has a positive effect of the surrounding environment if the sheet ends up in the ground or water. Dolomite and calcium carbonate are constantly renewed in the ground, provided from minerals. During decaying of the sheet, the dolomite and/or calcium carbonate will again return to the soil and act as a soil improvement agent. Further, the mix of dolomite and/or calcium carbonate having a polished surface, with at least one oil of vegetable origin will convert the dolomite and/or calcium carbonate to a lubricant. The lubricant function is further improved by an additive chosen from hydrated magnesium silicate such as talcum powder, leading to decrease of the tear of the machines used. Even further, the use of dolomite and/or calcium carbonate increases the stiffness of the sheet made from the composition, making it possible to fold the sheet and thereby create a dead fold. Further, the use of at least one oil of vegetable origin will act as a coupling agent in the composition leading to a low permeability compared to plastics. Even further, the use of paper fibers or any other tree fibers can reduce the use of polyesters while yet still provide a structure rigid enough to be appropriate for being used as a replacement for several plastics used today. The paper fibers further improve the stiffness making it possible to have a dead fold in the sheet made from the composition.

The dolomite and/or calcium carbonate particles according to the present invention have a polished surface, such that substantially no sharp edges remain on the surface of the particles. Removing substantially all the sharp edges of the particles will increase tear strength. Pre-treating the particles to saturation with at least one oil of vegetable origin will convert the dolomite particles into a lubricant which will limit the apparatus wear during processing thereof.

The inclusion of paper fibers makes it possible to reduce the use of polyesters, making the composition more environmentally friendly and making it possible for the end product to decompose in water.

The sheet of the present invention is suitable as a packaging or wrapping material. It may be used as a monolayer, making it easier to recycle since it does not comprise of layers of different components.

Further, the sheet of the present invention may be folded and can stay folded. In other words, the sheets when folded are provided with a dead fold, i.e. a fold which does not unfold spontaneously. Plastic, such as plastic made from PE or PLA can not be folded. Instead, when folded the material will instantly be smoothed out after folding. Thus, a material made from PE or PLA have no memory of folding. This makes a material made from PE or PLA not suitable to use for packaging or wrapping material when a dead fold is essential for the structure. This is for instance the case when wrapping margarine, butter or candy. Without a material suitable for making a dead fold, the material will smoothen out again and the wrapping will be opened.

Further, the surface of the sheet of the present invention is such that it is possible to write or print on the sheet. Thus, making a print on the sheet can be made by using water-based colors. No further processing, such as a corona treatment, has to be made for the colors to adhere efficiently to the material. Corona treatment is a widely used surface treatment method in the plastic film, extrusion, and converting industries. For conventional plastics, there is a need to do a corona treatment of the colored surface for the colors to stay in place. Thus, the processing of the sheet of the present invention into a final product is easier than when using conventional plastics.

In addition, the sheet comprising the composition as disclosed herein has beneficial barrier properties and keeps moisture away from a food product which is wrapped with the sheet. Again, this is a result of the components used in the composition for making the sheet and due to their combined characteristics only a monolayer is needed when using the sheet of the preset invention as compared to other packaging and wrapping materials which are made from a plurality of layers of different components. Thus, the sheet as provided herein protects the product from moisture by using only a single layer of the sheet, it is printable with water-based colors without corona treatment and it is further decomposable into components that can return to nature.

Even further, the decomposition of a sheet according to the present invention may be initiated at 30-35 ºC if it is present under compostable conditions with bacteria present. The decomposition may be completed within two months when nothing more than earth remains. As compared to a sheet made from PLA where the decomposition requires 70 ºC to be initiated, requiring higher demand on the facilities handling the decomposition. Moreover, the sheet does not release micro plastics into the environment and it does not compose of substances toxic to humans and the nature. By the composition of the present invention, the carbon dioxide (CO₂) emission is reduced up to 80%. From a life cycle analysis, it has been concluded that for each 6 tons of fossil plastics which is replaced by a sheet of the present invention 6.6 tons of carbon dioxide emission can be saved. This is in line with goals to reduce global warming.

### Definitions

The term "dolomite" means the mineral CaMg(CO₃)₂ or a commercially available product which is won from a natural occurring dolomite deposit or which is sold as "dolomite".

Talc is a clay mineral composed of hydrated magnesium silicate with the chemical formula Mg₃Si₄O₁₀(OH)₂.

The term "biodegradable" means material which decomposes substantially fully, and which does not discharge contaminants during incineration or leave plastic fragments after decomposition.

The term "particle size" means, for a non-spherical particle, the diameter of a corresponding spherical particle which apart from material is identical with the non-spherical particle regarding volume, weight or area.

The term "dead fold property" as used herein for a sheet of the composition of the invention, means a fold of the sheet which remains and does not unfold spontaneously. Dead fold property of the sheet is the property which allows it to, once folded or wrapped, stay folded and not unfold or unwrap. This is a property which is highly desirable for a wrapping material of certain food products such as margarine, candy or other consumer products, but not limited thereto.

The terms in the claims should have their general meaning within the technical area; unless any other definition has been given above. All referral to "a" or "the" "[composition, layer, container, film]" should be read as a referral to at least one of said composition, layer, container, film, etc. unless something else is specified.

### Detailed Description of the invention

The present invention concerns a sheet suitable for replacing plastics which is biodegradable, compostable, and which does not leave micro plastics in the ground or water during or after use.

The present invention concerns a biodegradable and compostable sheet comprising a composition, wherein the composition comprising:
(i) 10-50 % by weight of at least one biodegradable and/or decayable aromatic polyester;
(ii) 30-70 % by weight of dolomite and/or calcium carbonate particles having a polished surface;
(iii) 5-20 % by weight of paper fibers;
(iv) 1-5 % by weight of at least one oil of vegetable origin and/or at least one polyol;
(v) 10-20 % by weight of at least one additive chosen from hydrated magnesium silicate;
wherein the sheet has dead fold properties.

In one embodiment said composition comprises 40 % by weight of at least one biodegradable and/or decayable aromatic polyester, 30 % by weight of dolomite particles having a polished surface, 8 % by weight of paper fibers 2 % by weight of at least one oil of vegetable origin and 20 % by weight of an additive chosen from hydrated magnesium silicate, wherein the sheet has dead-fold properties.

In one embodiment of the present invention the biodegradable and/or decayable aromatic ester, e.g. aromatic polyester, may be a polybutylene adipate terephthalate (PBAT), a random copolymer produced from adipic acid, 1,4-butanediol, and terephthalic acid. Any other aromatic ester with similar properties as PBAT may be used. The at least one biodegradable and/or decayable aromatic ester is present in an amount of 10-50 % by weight. For instance, 10-20, 20-30, 30-40 or 40-50 % by weight. For example, the at least one biodegradable and/or decayable aromatic ester is present in an amount of 15, 27, 30, 40 or 50 % by weight as is disclosed in the experimental part.

In one embodiment of the present invention it may include dolomite particles. In one embodiment of the present invention, an alternative to the dolomite may be calcium carbonate, marble or limestone particles. Dolomite is a material acquired from the soil, where it originates from minerals. Said particles may have a polished surface, and by polishing the surface thereof the particles do not give rise to tear initiation in the sheet prepared from the composition. Thus, all edges that may give rise to a tear initiation in the sheet has been removed on the particles, and a level surface is produced which is smooth without any sharp corners. The particles constitute 30-70 % by weight. For example, 30-40 %, 40-50 %, 50-60 %, 60-70 % by weight of the composition, e.g. 35, 45, 55, 65 % by weight of the composition. In one embodiment the particles constitute 30 % by weight of the composition, in another composition the particles constitute 45 % by weight of the composition, in another embodiment the particles constitute 55 % by weight of the composition and in yet other embodiments it constitutes 65 % by weight of the composition.

Further, according to one embodiment of the present invention, said particles may have a size of about 2-4 µm, 2, 3 or 4 µm.

Said particles are pre-treated with at least one oil of vegetable origin or polyol as to reach saturation. The mix of the particles and the oil or polyol converts the particles to a lubricant, which decreases the tear of the machines used.

In one embodiment, the composition according to the invention may include at least one oil of vegetable origin and/or at least one polyol. The oil may be e.g. rape seed oil or any other suitable vegetable oil such as olive oil, maize oil, palm oil, soybean oil or sunflower seed oil. The at least one oil of vegetable origin or polyol constitutes 1-5 % by weight of the composition. For example, 1-3 or 3-5 % by weight. The at least one oil of vegetable origin may for example constitute 2, 3, 4 or 5 % by weight of the composition. In one embodiment the polyol is glycerol. In an embodiment of the invention wax is used as an alternative to oil and/or polyol. A combination of the before said is also possible.

The composition may in one embodiment according to the invention include paper fiber, where said paper fiber being processed to a powder with a particle size of 4-15 µm, for instance around 4, 8, 10, 12 or 15 µm. The paper fiber constitutes 5-20 % by weight of the composition. For instance, 5-10 %, 10-15 or 15-20 % by weight of the composition. The composition constitutes for example 8 % or 15 % by weight of paper fiber. The paper fiber can be obtained or produced from waste material in the paper industry or in the wood industry. Any other similar source of paper fiber may be used. The paper fiber is a renewable source of material, making the end-product more environmentally friendly and sustainable. The paper fiber may be cellulose fiber. The composition comprising paper fiber may be degradable and solvable in water, which is beneficial from an environmentally point of view. It is a well-known problem that nature including the oceans and lakes around the globe are full of plastics which are non-solvable in water.

In one embodiment, the composition according to the invention may include an additive chosen from hydrated magnesium silicate. Where talcum powder may be the preferred choice. The use of hydrated magnesium silicate further increases said lubricant effect, decreasing the tear of machines even further. The hydrated magnesium silicate constitutes 10-20 % by weight of the composition, for example, 10-15 % or 15-20% by weight. In one embodiment the hydrated magnesium silicate constitutes 10 % by weight of the composition, in another composition the hydrated magnesium silicate constitutes 15 % by weight of the composition. In yet another embodiment it constitutes 20 % by weight of the total weight of the composition.

In a compost container, the formation of methane gas requires 30-35 ºC to start. The methane gas further increases the growth of bacteria, which starts the decaying process. For the present invention, this is enough for the decaying process to start, while bioplastic compositions comprising PLA according to prior art require a temperature of 70 ºC for the decomposition to start. A sheet with the thickness of up to 75 µm, and even up to 1 mm, according to the present invention can be fully decomposed in 180 days during the conditions stated above. If the temperature is further increased to 55 ºC the decomposition process will be reduced to a time of some weeks.

During decaying process of sheets prepared according to the present invention, some of the sheets will decay and may give rise to biogas, and the remaining within the digested sludge will be spread out on the fields. Dolomite will not influence the decaying process but will act as soil improvement agent out on the fields as it will neutralize the pH, which is favorable for soil. The dolomite will for instance provide the soil with growth factors such as calcium and magnesium and other important minerals.

The problem with the use of plastic material from fossil sources, or from raw material which does not degrade in nature are getting increased attention from governments as well as the public. The use of plastics in products giving rise to micro plastics in soil and water has also gained interest during later years. The sheet of the present invention is fully biodegradable and compostable, without being a source of micro plastics. The dolomite is a neutral component within the composition, as it returns back to the nature from which it is obtained, if decomposed in nature. The paper fibers and the oil according to the present invention come from vegetable origin, which is a renewable raw material, while the aromatic esters available on the market as of today mostly is from non-renewable raw material, but also from partly renewable and fully degradable sources, such as PBAT disclosed above.

From the sheets of the present invention, several products can be produced. Among them are food wraps, candy paper, and product packaging. For further use, said sheet provides with characteristics for a material as to be foldable and it can retain the fold in a so called dead fold. This might be advantageous since many applications needs a folding or wrapping material which can retain its folding and not un-fold spontaneously. Further, the sheet of the present invention can be used as a coating on for instance cardboard boxes or cardboard packages as used for foods such as dairy products. Only a monolayer of the sheet is needed, since the composition has several characteristics otherwise only found in a combination of layers from different materials.

The sheets according to the present invention can be colored by using only water-based colors and no surface treatment, such as a corona treatment, is needed to adhere the colors to the sheet. Thus, the coloring process is easier than for many other conventionally used sheets where a corona treatment is needed for the colors to adhere properly to the sheets.

### EXAMPLES

By way of examples, and not limitation, the following examples identify a variety of compositions pursuant to the embodiments of the present invention.

### Experiment 1

In the first experiment dolomite particles, in a concentration of 30 % by weight of the calculated final composition, was polished to acquire smooth edges. Next, the particles were mixed with 2 % by weight of rapeseed oil to saturate the particles. The result of the mixing was a non-sticky mixture working as a lubricant in the further processing steps.

In parallel, 40 % by weight of PBAT was mixed with 20 % by weight of talcum powder and 8 % of paper fibers during heating to 150 ºC under a pressure of 225 bar. The mixing was done in an extruder and the lubricant mixture from the first step was added to the extruder.

Using the extruder, the composition was pushed out of the extruder and cut into granules. The total weight of the composition was 5000 ton. The granules were further processed by blow molding into a sheet with a thickness of 50 µm. A print was added on the sheet using water-based colors. The sheet was folded and used to cover a package of margarine.

### Experiment 2

The second experiment was a folding experiment. The sheet made in Experiment 1 was folded to take the shape of a package around margarine. The performance of the sheet was compared to a conventionally used package, made from a conventional sheet material of several layers with a surface treatment of aluminum. The sheet according to Experiment 1 could keep the folded shape as good as the conventionally used material. Thus, the sheet provides deal fold properties which are in line with available materials but is only composed of one layer, which is beneficial from a recycling perspective.

### Experiment 3

The third experiment was a decomposition experiment. The sheets used in Experiment 2 were placed in a compost together with food waste. The temperature in the compost was approximately 30 ºC at the start of the experiment. This induced the formation of methane gas, which in turn induced the growth of bacteria. During the decomposition process the temperature naturally increases over time to approximately 50 ºC. The sheet of the present invention was completely decomposed after only a week, while the sheet made from conventional layers with aluminum did not decompose but left residues in the compost.

Thus, from the Experiments above it can be concluded that the sheet of the present invention provides with dead fold properties which are as good as the sheets conventionally used, but the sheet of the present invention can be decomposed completely.

## Claims

1. A biodegradable and compostable sheet comprising a composition, wherein the composition comprising:
(i) 10-50 % by weight of at least one biodegradable and/or decayable aromatic polyester;
(ii) 30-70 % by weight of dolomite and/or calcium carbonate particles having a polished surface;
(iii) 5-20 % by weight of paper fibers;
(iv) 1-5 % by weight of at least one oil of vegetable origin and/or at least one polyol;
(v) 10-20 % by weight of at least one additive chosen from hydrated magnesium silicate;
wherein the sheet has dead fold properties.

2. A biodegradable and compostable sheet comprising a composition according to claim 1, wherein said dolomite particles have been pre-treated with said at least one oil of vegetable origin.

3. A biodegradable and compostable sheet comprising a composition according to claim 1 or 2, wherein said dolomite particles have a particle size of 2-4 µm.

4. A biodegradable and compostable sheet comprising a composition according to any of claims 1-3, wherein said paper fibers have a particle size of 4-15 µm.

5. A biodegradable and compostable sheet comprising a composition accoring to any of claims 1-4, wherein said paper fiber is obtained from left-overs or waste from the paper industry.

6. A biodegradable and compostable sheet comprising a composition according to any one of claims 1-5, wherein said hydrated magnesium silicate is talcum powder.

7. A biodegradable and compostable sheet comprising a composition according to any one of claims 1-6, wherein said sheet is a packaging wrap for food products, candy or consumer products.

8. A biodegradable and compostable sheet comprising a composition according to any one of claims 1-6, wherein said sheet is a coating on a package, cardboard box or cardboard package.

9. A biodegradable and compostable sheet comprising a composition according to any one of claims 1-8, wherein said sheet has a print with a water-based color.

10. Use of a sheet according to any one of claims 1-8, as a formable material having dead-fold properties for replacing fossil-based plastics having dead-fold properties.

11. Use of a sheet according to claim 10, wherein said formable material having dead-fold properties is chosen from packaging wrap for food products, candy or consumer products.

12. Use of a sheet according to claim 10, wherein said formable material having dead-fold properties is a coating on a package, cardboard box or cardboard package.

13. Use according to any one of claims 10-12, wherein said sheet is printed with a water-based color without a following corona treatment.
